# EUROPEAN PATENT SPECIFICATION

(11) **EP 2 780 642 B1**
(45) Date of publication and mention of the grant of the patent: **08.06.2016**
(21) Application number: 11808955.6
(22) Date of filing: 11.11.2011
(51) Int. Cl.: F24J 2/05, F24J 2/34, F24J 2/44

(54) **NATURAL CIRCULATION SOLAR SYSTEM WITH VACUUM TUBES WITH AN ACCUMULATION TANK CAVITY**
SOLARANLAGE MIT NATÜRLICHER ZIRKULATION UND VAKUUMRÖHREN MIT EINEM SAMMELTANK-HOHLRAUM
SYSTÈME SOLAIRE À CIRCULATION NORMALE DOTÉ DE TUBES À VIDE AYANT UNE CAVITÉ DE RÉSERVOIR D'ACCUMULATION

(43) Date of publication of application: 24.09.2014
(73) Proprietor: CMG Solari S.r.l., 73040 Melissano (LE) (IT)
(72) Inventor: GIANNELLI, Mario, I-73040 Melissano (IT)
(74) Representative: Bruni, Giovanni
(86) International application number: PCT/IT2011/000375
(87) International publication number: WO 2013/069034

(56) References cited:
- WO-A2-2010/075031
- AU-B2- 504 508
- AU-B2- 568 826
- GB-A- 2 058 336
- US-A- 4 505 261
- US-A- 5 931 156
- US-A1- 2001 054 419

## Description

The present invention relates to a natural circulation solar system for the production of hot domestic water, which is provided with a jacketed tank and it is realized so that it allows vacuum collector tubes to be engaged.

At the state of the art, there are known many applications relating to the natural circulation solar systems for the production of hot domestic water. Specifically, the present invention relates to an applicative variant relative to the natural circulation solar systems with double circuit, characterized by the use of directly boiler-engaged vacuum tubes. The similar products known at the state of the art can be classified in three main categories: "direct" systems, "indirect" systems with heat exchanger and "Heat pipe" indirect systems.

In the so-called "direct" systems is provided a single circuit (the sanitary one) where the water contained in the tubes is heated by the solar radiation and goes up again towards the storage boiler. The international patent application WO2008002651 and the Chinese patent CN21363920 belong to this category and relate to a solar energy heater with sealed tank, reflecting surface and vacuum pipe which is directly connected to the tank.

Notwithstanding a remarkable radiation conversion efficiency, these products have considerable drawbacks, among which: limestone deposition inside the pipes; limestone formation on the gaskets (which usually cause water leakage); possible formation of ice with consequent pipe breaking; possible flooding in case of water leakage. Moreover, the presence of many mechanical gaskets between different materials (the metal of the boiler and the glass of the pipes) makes it difficult to guarantee sealing performances during the time and at high pressures, which is the reason why, many of these products function without pressure in the boiler, i.e. by gravity. This last aspect represents a strong limitation in the real use of these systems, which, to obviate the problem, usually use a thrust pump on the circuit of the hot water going out from the boiler, in order to allow the hot and cold water flows to be mixed correctly in the user withdrawing points.

The "indirect" systems with heat exchanger belong instead to the double circuit systems, i.e. the solar and user ones. For example, in the Japanese patent JP2007232227 it is described a system comprising a storage tank, a heating collection system through the fluid recirculation and a heat exchanger. If on the one hand such systems solve many problems linked to the drawbacks of the previously described "direct" systems, on the other hand they have different drawbacks, such as for example; reduced capacity to guarantee a rapid and efficient heating of the sanitary hot water, above all when the temperature in the boiler is not sufficiently high; loss of water stratification in the primary circuit; limestone formation inside the exchanger (which is usually represented by a coiled pipe with reduced diameter); possibility of flooding in case of leakage from the solar circuit. Moreover, for both kinds - "direct" systems, "indirect systems" with heat exchanger - the absence of pressure in the boiler represents a factor which induces to use sheets with reduced thickness, sensible to pitting corrosion.

Finally, in the systems with "Heat Pipe" technology, in addition to the vacuum pipes it is provided a heat pipe (usually in copper) in which, in a depression with respect to the environment, it is contained a small quantity of nontoxic fluid which vaporizes at low temperatures. To the boiler there are fixed capsules, in which the heat pipe heads are housed, so that the heat delivered by the same heat pipes can be transferred, for conduction, to the capsules which, in turn, heat the water contained in the boiler. A variant of this solution provides that the heat pipe condenser is directly immersed in the water contained in the boiler. Such systems are the most complex from a structural point of view and, as a consequence, have the main disadvantage that the production costs are particularly high owing to the use of copper heat pipes. There are also other disadvantages: presence of many elements subjected to high pressures and temperatures; reduction of efficiency due to the heating transfer for conduction as well as due to the limestone formation on the "hot" points; disassembling difficulty in case the heat pipe is in contact with the water (due to the limestone formation on the heating element head); possibility of liquid leakage from the various sealing elements, due to the considerable quantity of heat delivered by the heat pipe and to the limestone formation.

At the state of the art are also known also the following documents. US5931156 relates to a heat-pipe type solar collector comprising a heat absorber portion adapted to absorb solar energy to evaporate a working fluid in heat tube elements and a heat release portion communicating with the heat absorber portion and having a body of a semi-annular or annular cross-section. US2001054419 refer to a solar thermoaccumulator, comprising a parallel battery of closed-circuit vacuum solar pipes, and provided with a plurality of accumulation bulbs, which are either immersed in a primary conductive fluid that circulates in an annular chamber having an air space, whose internal wall is the containing wall of a reservoir containing a fluid to be heated; or are put in direct thermally conductive contact with tubular tangs that are attached to and inserted in a reservoir. WO2010075031 describes a pressurized solar water heater including a water storage tank and a solar heat collection device forming a first heat exchange circulating loop and a second heat exchange circulating loop by means of a longitudinal header and a U-shaped heat exchange tube with two branch lines inside.

Therefore, object of the present invention is a vacuum tubes natural circulation solar thermal system able to overcome all the above described technical drawbacks, maximizing the efficiency and the reliability of the system and limiting, at the same time, the use of "valuable" materials as for example copper and aluminum, with a consequent remarkable reduction of the production costs.

The object of the present invention achieves the prefixed aims by combining the vacuum tubes technology with a storage provided with jacket to which the vacuum tubes are directly or indirectly connected. The natural circulation solar system is also characterized by the fact that said storage is provided with at least a duct for filling the solar primary circuit.

The advantages of the present invention will be enlisted in the following description which refers to the drawings 1/2 and 2/2, which represent an absolutely not limiting embodiment of the present invention. In particular:
- fig. 1 is an example scheme of the solar system object of the invention with direct connection of the vacuum tubes to the jacketed tank;
- fig. 2 is an example scheme of the solar system object of the invention with indirect connection of the vacuum tubes to jacketed tank;
- fig. 3 is a section of the air gap boiler, which shows the connection between jacket and vacuum tubes.

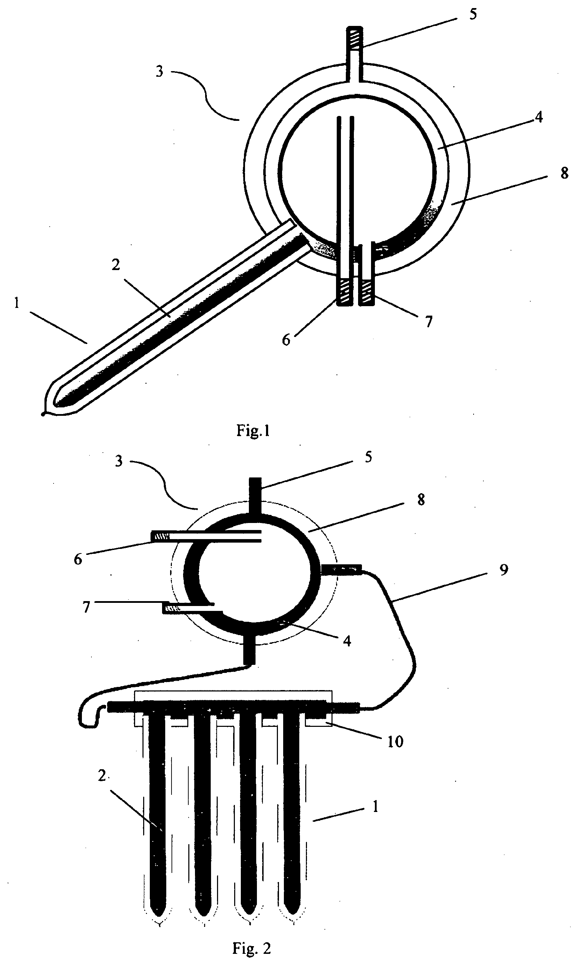

Fig. 1 is an absolutely not limiting example scheme of the solar system object of the present invention showing the main elements of the same system. In its simplest embodiment, the system is made up of one or more vacuum tubes 1 inside which a thermo-vector fluid 2 flows for convection, and a storage tank 3 containing water for domestic use, provided with a jacket 4. The vacuum tube 1 containing the thermo-vector fluid 2 is connected directly to the jacket 4. The tank 3 is provided with a duct 5, connected to the jacket 4, used for filling the solar circuit, usually arranged in the head of the same tank, and with two water pipes 6 and 7 for withdrawing and admitting hot and cold water therein, respectively. Finally, the storage tank 3 is provided with a suitable layer of insulating material 8 which separates it from outside, allowing the stored heat to be kept for long.

In another preferred, absolutely not limiting embodiment of the present invention it is possible an indirect connection by means of pipes between a manifold 10 to which the vacuum tubes 1 are engaged and the jacket 4 of the storage tank 3. As it is shown in fig. 2, the tank 3 is connected indirectly to the vacuum tubes 1 through pipes 9 which allow the thermo-vector fluid 2 to be circulated between the manifold 10 and the jacket 4. Similarly to the previously described case, also in this configuration it is provided a duct 5 for filling the solar circuit and at least two water pipes 6 and 7 for withdrawing and admitting, respectively, hot and cold water from the boiler.

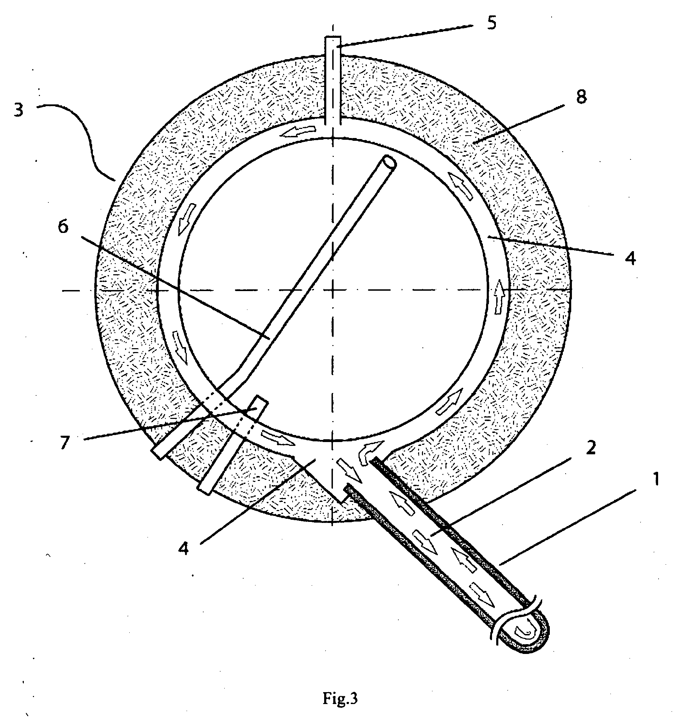

Referring to the variant having the direct engagement between air gap and vacuum pipes, it is provided a section of the storage tank 3 (see fig. 3) where the above described various main elements are best shown: the tank 3 is made up of a storage for hot domestic water, a jacket 4 to which the vacuum tubes 1 are engaged (in a direct way according to the scheme of fig. 1) and of a layer of insulating material 8; moreover, said storage 3, is provided with a duct 5 used for filling the solar circuit, and at least two water pipes 6 and 7 for withdrawing and admitting, respectively, hot and cold water from the tank 3.

The functioning method of a solar system as described is quite simple and is characterized by a double circuit: the primary one, in which the thermo-vector fluid 2 flows separated by the sanitary circuit, where instead it is contained the water to be heated. For example, the thermo-vector fluid 2 can be made up of a mix of water and glycol. The described system is with natural circulation, and the heat exchange between the tubes 1 and the storage 3, occurs by convection. The heat collected by the vacuum tubes 1 heats directly the thermo-vector fluid 2 contained therein, which reducing in density, moves upwards up to reach the jacket 4 where, through the separation wall, gives heat to the water contained in the boiler 3. After giving heat, the thermo-vector fluid 2 cools down and, while increasing density, moves downwards up to reach the tubes inside again, to receive heat again from the solar radiation and to begin another cycle thereby. The main advantage of the present invention is that, by using mainly glass (for the pipes) and steel (for the boiler) as raw materials to realize the main elements of the system, it is possible to achieve a drastic reduction of the "valuable" metal quantity, as for example copper and aluminum. This leads to a sensible reduction of the production costs, without compromising the whole solar system yield. On the contrary, in the solar system object of the present invention, the reliability and yield parameters can be higher with respect to the systems known at the state of the art.

Moreover, the system provides important advantages, as for example the one to combine strength and reliability of the air gap boilers with high efficiency of solar radiation collection, even in adverse environment conditions, which is typical of the vacuum tubes. In addition, the present invention does not generate excessive stresses on the sealing elements between tubes and boiler, since the solar circuit is of the low pressure type protected by a safety valve.

Another advantage is that the primary fluid contained in the tubes represents another heat reserve available for the boiler, useful to guarantee major availability of hot domestic water during the night.

Finally, the present invention represents a solution able to maximize the efficiency and the reliability of the solar systems, thus limiting the use of "valuable" material. The invention combines substantially two reliable and economic technologies, the vacuum tubes one (above all diffused in China) and the one of the jacketed tank (above all diffused in the West).

## Claims

1. Natural circulation solar system comprising a double circuit respectively for the thermo-vector fluid (2) and the domestic water, a plurality of vacuum tubes (1), at least a storage tank (3) provided with at least a jacket (4), said vacuum tubes (1) being connected to the jacket (4) wherein said thermo-vector fluid (2) flows inside the solar primary circuit comprising said vacuum tubes (3) and the jacket (4) of the storage tank (3) and wherein said storage tank (3) is provided with at least a duct (5) for filling the solar primary circuit.

2. Solar system according to claim 1, **characterized in that** said vacuum tubes (1) are engaged directly to the jacket (4).

3. Solar system according to claim 1, **characterized in that** said vacuum tubes (1) are connected to the jacket (4) indirectly through a manifold (10), where the vacuum tubes are engaged, and by means of tubes (9) which deliver the thermo-vector fluid (2) to the jacket (4) of the tank (3) and vice versa.

4. Solar system according to claim 2 or 3, **characterized in that** hot domestic water contained inside the storage tank (3) is heated by convection by the thermo-vector fluid (2) by means of the jacket (4).

5. Solar system according to any one of the preceding claims, **characterized in that** said storage tank (3) is provided with a layer of insulating material (8).

6. Solar system according to any one of the preceding claims, **characterized in that** said storage tank (3) is provided with at least two water tubes (6, 7) for withdrawing and admitting, respectively, the hot and cold water from the tank (3) to the water circuit to be interlocked and vice versa.

## Patentansprüche

1. Solarsystem mit natürlicher Umwälzung, das einen Doppelkreislauf für die Wärmeträgerflüssigkeit (2) und resp. für Wasser für den häuslichen Gebrauch aufweist, mit einer Mehrzahl von Rohren (1) unter Vakuum, mit zumindest einem Sammeltank (3) mit mindestens einem Mantel (4), wobei die besagten Vakuumrohre (1) mit dem Mantel (4) verbunden sind, wobei die besagte Wärmeträgerflüssigkeit (2) innerhalb des Hauptsolarkreislaufs strömt, der die besagten Vakuumrohre (3) und den Mantel (4) des Sammeltanks (3) umfasst, und wobei der besagte Sammeltank (3) mit mindestens einer Leitung (5) vorgesehen ist, um die Hauptsolarkreislauf zu füllen.

2. Solarsystem nach Anspruch 1, **dadurch gekennzeichnet, dass** die besagten Vakuumröhren (1) direkt mit dem Mantel (4) angekoppelt sind.

3. Solarsystem nach Anspruch 1, **dadurch gekennzeichnet, dass** die besagten Vakuumröhren (1) mit dem Mantel (4) indirekt durch einen Verteiler (4) verbunden sind, in dem die Vakuumröhren gekoppelt sind, und mit Hilfe von Rohren (9), die die Wärmeträgerflüssigkeit (2) zum Mantel (4) des Tanks (3) fördern, und umgekehrt.

4. Solarsystem nach Anspruch 2 oder 3, **dadurch gekennzeichnet, dass** Heißwasser für den häuslichen Gebrauch, das innerhalb des Sammeltanks (3) enthalten ist, durch Konvektion von der Wärmeträgerflüssigkeit (2) mittels des Mantels (4) erhitzt wird.

5. Solarsystem nach jedem der vorhergehenden Ansprüche, **dadurch gekennzeichnet, dass** der besagte Sammeltank (3) mit einer Schicht aus isolierendem Material (8) versehen ist.

6. Solarsystem nach jedem der vorhergehenden Ansprüche, **dadurch gekennzeichnet, dass** der besagte Sammeltank (3) mit mindestens zwei Wasserröhren (6, 7) versehen ist, um das heiße und kalte Wasser aus dem Tank (3) zum Wasserkreislauf zu entziehen resp. zu fördern, um miteinander verbunden zu werden, und umgekehrt.

## Revendications

1. Système solaire à circulation naturelle comprenant un double circuit, respectivement pour le fluide caloporteur (2) et pour une eau à usage domestique, une pluralité de tubes (1) sous vide, au moins un réservoir de collecte (3) muni d'au moins une chemise (4), lesdits tubes à vide (1) étant reliés à la chemise (4), dans lequel ledit fluide caloporteur (2) passe à l'intérieur du circuit solaire principal comprenant lesdits tubes à vide (3) et la chemise (4) du réservoir de collecte (3) et dans lequel ledit réservoir de collecte (3) est pourvu d'au moins un conduit (5) pour remplir le circuit solaire principal.

2. Système solaire selon la revendication 1, **caractérisé en ce que** lesdits tubes à vide (1) sont couplés directement à la chemise (4).

3. Système solaire selon la revendication 1, **caractérisé en ce que** lesdits tubes à vide (1) sont reliés à la chemise (4) indirectement par l'intermédiaire d'un collecteur (4), où les tubes à vide sont couplés et au moyen de tubes (9) qui alimentent le fluide caloporteur (2) à la chemise (4) du réservoir (3) et vice versa.

4. Système solaire selon la revendication 2 ou 3, **caractérisé en ce que** l'eau chaude à usage domestique contenue dans l'intérieur du réservoir de collecte (3) est chauffée par convection par le fluide caloporteur (2) au moyen de la chemise (4).

5. Système solaire selon l'une quelconque des revendications précédentes, **caractérisé en ce que** ledit réservoir de collecte (3) est pourvu d'une couche de matériau isolant (8).

6. Système solaire selon l'une quelconque des revendications précédentes, **caractérisé en ce que** ledit réservoir de collecte (3) est pourvu d'au moins deux tubes (6, 7) d'eau pour retirer et alimenter, respectivement, l'eau chaude et froide du réservoir (3) au circuit d'eau, de manière à être connectés mutuellement, et vice versa.
